# DEMANDE DE BREVET EUROPEEN

(11) **EP 1 433 636 A1**
(43) Date de publication de la demande: **30.06.2004**
(21) Numéro de dépôt: 03293252.7
(22) Date de dépôt: 19.12.2003
(51) Int. Cl.: B60J 3/02, B60Q 1/26

(54) **Pare soleil pour véhicule automobile**

(30) Priorité: 23.12.2002 FR 0216512
(71) Demandeur: Renault s.a.s., 92100 Boulogne Billancourt (FR)
(72) Inventeur: Gignoux, Olivier, 92380 Garches (FR); Rouffignac, Eric, 28130 Saint Martin de Nigelles (FR); Vacheresse, Claude, 28130 Saint Martin de Nigelles (FR)

(57) **Abrégé**

L'invention concerne un pare soleil (10) pour véhicule automobile, ledit pare soleil comportant une face externe visible de l'extérieur du véhicule en position déployée et une face interne opposée, et comprenant :
- un volet (16) mobile entre une position d'utilisation dans laquelle une de ses faces est disposée contre ladite face externe et une position de repos dans laquelle son autre face est disposée contre ladite face interne, et
- des moyens de fixation du volet sur lesdites faces interne et externe,
ledit volet (16) étant apte à supporter au moins une partie d'affichage (34).

## Description

L'invention concerne un pare soleil pour véhicule automobile, notamment un pare soleil comportant un support apte à recevoir un moyen d'éclairage.

Ce type de pare soleil est par exemple utilisé par les véhicules de police banalisés, le support comportant alors le mot police. Le support peut être placé dans deux positions dans lesquelles soit le mot police n'est pas visible de l'extérieur du véhicule, soit il est éclairé et visible de l'extérieur. Actuellement, un support connu consiste en une cassette sensiblement de même épaisseur que le pare conseil contenant plusieurs lampes à incandescence qui éclairent le mot police figurant sur une face de la cassette. L'autre face est d'une matière opaque, sensiblement de même couleur que le pare soleil. La cassette est logée dans une ouverture traversante du pare soleil sensiblement de mêmes dimensions. Elle est montée à pivot dans cette dernière autour d'un axe passant par son centre de sorte que soit la face opaque, soit la face éclairée peut être visible de l'extérieur du véhicule.

Ce dispositif est toutefois encombrant et la cassette est trop visible de l'extérieur du véhicule lorsqu'elle n'est pas en position d'utilisation. Par ailleurs, en raison de la structure actuelle des pare soleils, qui sont formés de deux coques moulées collées l'une sur l'autre, le montage d'une cassette nécessite la réalisation d'un nouvel outillage pour chaque type de pare soleil. Enfin, la consommation électrique des lampes à incandescence est assez élevée, et les lampes doivent être changées régulièrement.

L'invention vise à pallier à ces inconvénients en proposant un pare soleil comportant un support léger, discret, pouvant être facilement monté sur n'importe quel type de pare soleil. Ce support peut comporter une partie d'affichage et un moyen d'éclairage.

A cet effet, l'objet de l'invention concerne un pare soleil pour véhicule automobile, ledit pare soleil comportant une face externe visible de l'extérieur du véhicule en position déployée et une face interne opposée, caractérisé en ce qu'il comprend un volet mobile entre une position d'utilisation dans laquelle une de ses faces est disposée contre la face externe et une position de repos dans laquelle son autre face est disposée contre la face interne, et des moyens de fixation du volet sur lesdites faces interne et externe, ledit volet étant apte à supporter au moins une partie d'affichage. Il n'est ainsi plus nécessaire de réaliser une ouverture traversante de taille importante dans le pare soleil lui-même. De plus, l'aspect de la face externe du pare soleil n'est pas modifié de sorte que l'on ne peut soupçonner la présence d'un élément supplémentaire sur le pare soleil.

En particulier, ledit volet peut être relié au pare soleil au moyen d'une charnière souple s'étendant le long d'un bord dudit pare soleil. Le volet peut ainsi facilement et rapidement être déplacé d'une position à une autre.

Dans une variante, les moyens de fixation sont magnétiques de sorte que la fixation est rapide, facile et sûre. Dans un mode de réalisation particulier, le volet comprend au moins un aimant et/ou au moins une plaque métallique sur au moins une face, et le pare soleil comprend respectivement au moins une plaque métallique et/ou au moins un aimant sur chacune de ses faces, lesdites plaques et aimants respectifs étant disposés en regard les uns des autres lorsque le volet est en position d'utilisation ou de repos. Dans le cas d'un pare soleil comprenant en outre un corps recouvert d'une peau, une plaque métallique peut être disposée du côté de ladite face externe et fixée sur le corps du pare soleil, entre le corps et la peau. La plaque est ainsi totalement invisible de l'extérieur du véhicule lorsque le volet est en position de repos.

Dans une variante, le pare soleil comprend en outre une plaque support fixée sur la face interne et supportant ladite charnière souple.

Dans un mode de réalisation, ledit volet comprend un moyen d'éclairage de ladite au moins une partie d'affichage. Cette partie peut être sous forme de lettres ou symboles et être illuminée quelque soit l'éclairage extérieur, ce qui permet une identification aisée des lettres ou symboles.

Avantageusement, le moyen d'éclairage peut consister en une lampe électroluminescente. La consommation est alors faible, et ce moyen d'éclairage présente un poids et une épaisseur faibles de sorte que le volet reste discret en position de repos et ne forme pas une surépaisseur importante sur le pare soleil.

On peut également prévoir des moyens de commande pour allumer le moyen d'éclairage lorsque le volet est en position d'utilisation. Il peut s'agir, par exemple, d'un contacteur électromagnétique qui provoque l'allumage du moyen d'éclairage dès que le volet n'est plus en contact avec la face interne du pare soleil, et son extinction dès que le volet est en contact avec ladite face interne.

L'invention est maintenant décrite en référence aux dessins annexés, non limitatifs, dans lesquels :
- la figure 1 est une vue éclatée des différents éléments du pare soleil selon un mode de réalisation de l'invention ;
- la figure 2 est une vue de face du pare soleil de la figure 1 du côté de sa face externe, le volet étant en position de repos ;
- la figure 3 est une vue en coupe du pare soleil suivant la ligne A-A de la figure 2 ;
- la figure 4 est une vue de face du pare soleil de la figure 1 du côté de sa face externe, le volet étant en position d'utilisation ;
- la figure 5 est une vue en coupe du pare soleil suivant la ligne B-B de la figure 4.

Dans le mode de réalisation représenté sur les figures, le pare soleil 10 est constitué d'un corps formé de deux demi coques 12a, 12b moulées et collées l'une contre l'autre.

On définit par face interne 20 et face externe 19, les faces du pare soleil qui sont respectivement dirigées vers l'intérieur et l'extérieur du véhicule automobile lorsque le pare soleil est en position déployée (contre ou proche le pare brise du véhicule). Ainsi, lorsque le pare soleil est en position repliée (contre ou proche du toit de l'habitacle du véhicule), seule sa face externe 19 est visible.

Une peau d'habillage (non représentée) moulant les formes des demi coques 12a, 12b recouvre ces dernières.

Le pare soleil comprend également :
- une plaque support 14 destinée à être fixée sur la face interne du pare soleil formée par la demi coque 12a ;
- un volet 16 apte à supporter une partie d'affichage ;
- une charnière souple 18 assurant la liaison entre la plaque support 14 et le volet 16.

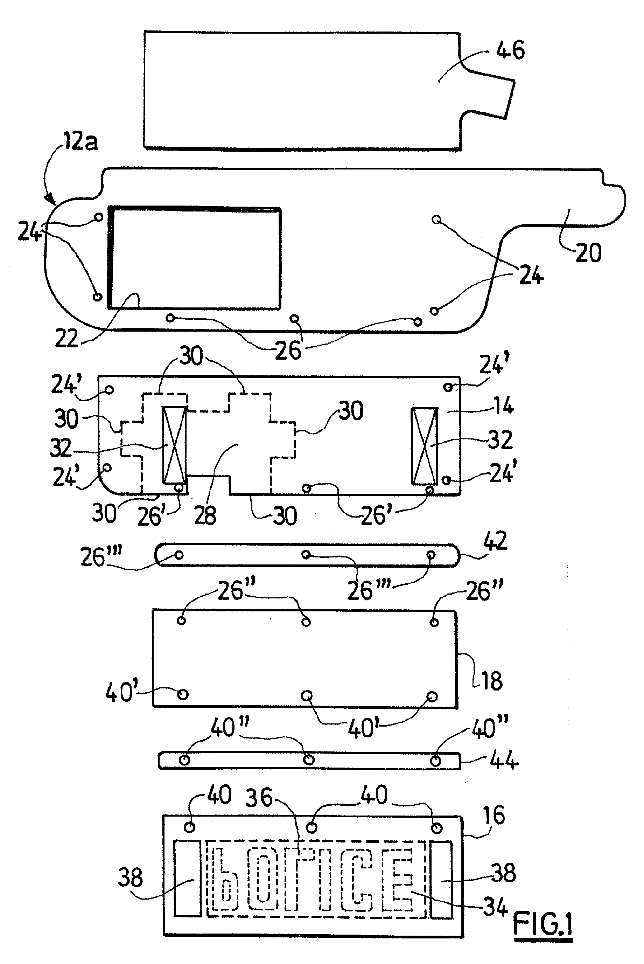

Ces différents éléments sont décrits en référence à la figure 1.

Sur la figure 1, seule la demi coque 12a formant la face interne 20 du pare soleil est visible. Cette face interne 20 présente un orifice 22 sensiblement rectangulaire destiné habituellement à recevoir un miroir. Pour les besoins de l'invention, le miroir n'est pas mis en place dans l'orifice 22. La demi coque 12a présente une première série de perçages 24 à proximité de ses extrémités latérales destinés à la fixation de la plaque support 14 et une deuxième série de perçages 26 à proximité de son bord inférieur longitudinal destinés à la fixation de la plaque support 14 et de la charnière souple 18. Le bord inférieur longitudinal du pare soleil est défini comme étant le bord opposé à l'axe de rotation du pare soleil autour duquel ce dernier pivote de la position déployée à la position repliée.

La plaque support 14 présente une forme sensiblement rectangulaire, ses dimensions étant légèrement inférieures à celles de la demi coque 12a de façon à pouvoir être fixée sur cette dernière sans s'étendre au-delà. A cet effet, elle présente également une première série de perçages 24' à proximité de ses extrémités latérales destinés à venir en regard des perçages 24 de la demi coque 12a, et une deuxième série de perçages 26' à proximité d'un bord longitudinal destinés à venir en regard des perçages 26 de la demi coque 12a. Sur sa face destinée à venir en appui contre la demi coque 12a, la plaque support 14 comprend une partie de centrage 28 dont les bords 30 saillent sensiblement perpendiculairement par rapport à la plaque support. Cette partie de centrage 28 est visible en trait discontinu sur la figure 1. Elle présente une forme sensiblement complémentaire de l'orifice 22 de la demi coque 12a, de sorte que les bords 30 puissent venir en appui contre les parois latérales de l'orifice, permettant le centrage de la plaque support 14 par rapport à la demi coque 12a. Sur sa face opposée, la plaque support 14 comprend deux plaques magnétiques 32 destinées à la fixation du volet 16.

Le volet 16 est une feuille métallique présentant une forme sensiblement rectangulaire. Il comporte une partie d'affichage 34 comportant des moyens d'éclairage 36. Ces derniers consistent en une lampe électroluminescente représentant un mot (POLICE dans l'exemple représenté). La partie d'affichage 34 est disposée du côté du volet destiné à être visible lorsque le volet est en position d'utilisation contre la face externe du pare soleil. Sur la face opposée, le volet comprend deux plaques magnétiques 38 destinées à assurer sa fixation sur la face externe du pare soleil. Le volet 16 présente en outre sur un de ses bords longitudinaux une série de perçages 40 destinés à assurer sa fixation sur la charnière souple 18.

La charnière souple 18 présente une forme sensiblement rectangulaire. Elle comporte une première série de perçages 26" s'étendant à proximité d'un de ses bords longitudinaux et destinés à assurer sa fixation sur la plaque support 14, et une deuxième série de perçages 40' destinés à assurer sa fixation sur le volet 16.

Ces différents éléments 14, 16, 18 sont montés de la façon suivante. La plaque support 14 est tout d'abord centrée sur la demi coque 12a en insérant la partie de centrage 28 dans l'orifice 22. La plaque support 14 est alors rivetée sur la demi coque 12a grâce aux perçages 24 et 24' coïncidant. La charnière souple 18 est ensuite rivetée à la plaque support 14 et à la demi coque 12a grâce aux perçages 26, 26' et 26" coïncidant. Afin de renforcer la zone comportant les perçages, une languette 42 comportant des perçages 26"' correspondants peut être rivetée simultanément entre la plaque support 14 et la charnière souple 18 ou au dessus ce cette dernière. Le volet 16 est, quant à lui, riveté à la charnière souple 18 au moyen des perçages 40' et 40. Une languette 44 comportant des perçages correspondant 40" peut également être rivetée simultanément afin de renforcer la fixation.

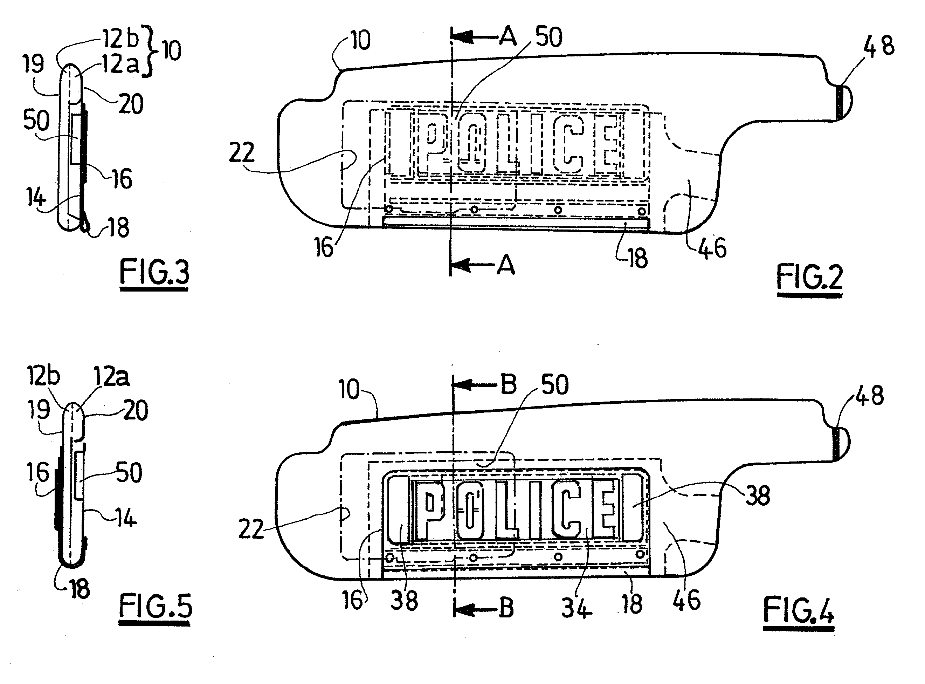

Les perçages 26 étant disposés du côté du pare soleil opposé à son axe de rotation, le volet 16 peut être pivoté d'une position de repos dans laquelle il est en appui contre la face interne du pare soleil, tel que représenté sur les figures 2 et 3, vers une position d'utilisation dans laquelle il est en appui contre la face externe 19 du pare soleil, tel que représenté sur les figures 4 et 5. La charnière souple 18 est alors déployée et épouse sensiblement la partie inférieure du pare soleil (figure 3). Les moyens d'affichage 34 sont conçus pour être visibles et lisibles uniquement dans cette dernière position. Sur les figures 2 et 4, les parties non visibles sont représentées en trait discontinu, pour plus de clarté, la plaque support 14 n'a pas été représentée.

Afin d'assurer la fixation du volet 16 sur la face externe du pare soleil, une plaque métallique 46 est fixée sur cette dernière entre la demi coque 12b et la peau d'habillage, de manière à être invisible. Le volet 16 est alors maintenu en position d'utilisation grâce à l'adhésion des plaques magnétiques 38 sur la plaque métallique 46. Dans sa position de repos, le volet 16 est maintenu sur la face interne du pare soleil grâce à l'adhésion des aimants 32 de la plaque support 14 sur la matière métallique du volet 16.

Les moyens d'éclairage 36 de la partie d'affichage comportent des moyens de commande reliés à l'alimentation électrique du véhicule par l'intermédiaire d'un contact 48 disposé au niveau de l'axe de rotation du pare soleil. Ces moyens de commande consistent par exemple en un contacteur électromagnétique 50 relié à la lampe électroluminescente. Ce contacteur 50 est conçu de manière à couper l'alimentation uniquement lorsque le volet 16 est en contact avec la face interne 20 du pare soleil. Il est par exemple disposé dans l'orifice 22 sous la plaque support 14 (figures 3 et 5).

La plaque support 14 et le volet 16 peuvent être facilement adaptés, sans modification importante, à n'importe quel type de pare soleil grâce à leur conception simple, de sorte que leur réalisation et fixation en est facilitée. De plus, la durée d'une lampe électroluminescente étant supérieure à celle des lampes à incandescence, elle a besoin d'être remplacée moins souvent pour un poids beaucoup plus faible.

Bien entendu, d'autres modes de réalisation peuvent être envisagés sans sortir du cadre de l'invention. On peut ainsi envisager des formes très diverses pour le volet 16, la charnière 18, la plaque support 14 et la plaque métallique 46. Les aimants et plaques métalliques permettant la fixation peuvent être de formes variées et d'un nombre différent selon les matériaux employés pour les différents éléments, et ils peuvent être disposés indifféremment sur l'une ou l'autre des faces à solidariser temporairement. D'autres moyens de commande du moyen d'éclairage, tels qu'un bouton, peuvent également être envisagés. Par ailleurs, on peut concevoir un volet totalement indépendant du pare soleil et maintenu uniquement par des moyens magnétiques ; ou bien un volet relié directement à la face interne du pare soleil par l'intermédiaire de la charnière souple, sans plaque support, les aimants ou plaques métalliques étant fixés directement sur le pare soleil. Enfin, d'autres moyens de fixation peuvent être utilisés, tels que des bandes velcro par exemple.

## Revendications

1. Pare soleil (10) pour véhicule automobile, ledit pare soleil comportant une face externe (19) visible de l'extérieur du véhicule en position déployée et une face interne (20) opposée, **caractérisé en ce qu'**il comprend un volet (16) mobile entre une position d'utilisation dans laquelle une de ses faces est disposée contre ladite face externe (19) et une position de repos dans laquelle son autre face est disposée contre ladite face interne (20), et des moyens de fixation du volet sur lesdites faces interne et externe, ledit volet (16) étant apte à supporter au moins une partie d'affichage (34).

2. Pare soleil selon la revendication 1, **caractérisé en ce que** ledit volet (16) est relié au pare soleil au moyen d'une charnière souple (18) s'étendant le long d'un bord longitudinal dudit pare soleil.

3. Pare soleil selon la revendication 1 ou 2, **caractérisé en ce que** les moyens de fixation sont magnétiques.

4. Pare soleil selon la revendication 3, **caractérisé en ce que** le volet (16) comprend au moins un aimant (38) et/ou au moins une plaque métallique sur au moins une face, et **en ce que** le pare soleil comprend respectivement au moins une plaque métallique (46) et/ou au moins un aimant (32) sur chacune de ses faces, lesdites plaques et aimants respectifs étant disposés en regard les uns des autres lorsque le volet (16) est en position d'utilisation ou de repos.

5. Pare soleil selon la revendication 4 comprenant en outre un corps (12a, 12b) recouvert d'une peau, **caractérisé en ce qu'**il comprend une plaque métallique (46) disposée du côté de ladite face externe (19) et fixée sur le corps du pare soleil, entre le corps et la peau.

6. Pare soleil selon l'une des revendications 2 à 5, **caractérisé en ce qu'**il comprend en outre une plaque support (14) fixée sur la face interne (20) et supportant ladite charnière souple (18).

7. Pare soleil selon l'une des revendications 1 à 6, **caractérisé en ce que** ledit volet (16) comprend un moyen d'éclairage (36) de ladite au moins une partie d'affichage (34).

8. Pare soleil selon la revendication 7, **caractérisé en ce que** le moyen d'éclairage (36) consiste en une lampe électroluminescente.

9. Pare soleil selon la revendication 7 ou 8, **caractérisé en ce qu'**il comprend des moyens de commande pour allumer le moyen d'éclairage (36) lorsque le volet (16) est en position d'utilisation.

10. Pare soleil selon la revendication 9, **caractérisé en ce que** les moyens de commande comprennent un contacteur électromagnétique (50) qui provoque l'allumage du moyen d'éclairage (36) dès que le volet (16) n'est plus en contact avec la face interne (20), et son extinction dès que le volet (16) est en contact avec ladite face interne (20).
